Europäisches Patentamt

European Patent Office

Office européen des brevets

(19)

(11) Numéro de publication: **0 211 768**
**B1**

(12) **FASCICULE DE BREVET EUROPEEN**

(45) Date de publication du fascicule du brevet: **31.10.90**

(51) Int. Cl.⁵: **B 01 D 53/00,** B 05 B 15/00

(21) Numéro de dépôt: **86401753.8**

(22) Date de dépôt: **05.08.86**

(54) **Dispositif de destruction des solvants contenus dans l'air extrait des cabines de peinture.**

(30) Priorité: **06.08.85 FR 8512020**

(43) Date de publication de la demande:
**25.02.87 Bulletin 87/09**

(45) Mention de la délivrance du brevet:
**31.10.90 Bulletin 90/44**

(84) Etats contractants désignés:
**AT BE CH DE GB IT LI LU NL SE**

(56) Documents cités:
**WO-A-82/02680**
**DE-B-1 195 892**
**DE-B-1 619 850**
**DE-B-2 707 226**
**FR-A-1 003 705**

(73) Titulaire: **O.M.I.A. Société Anonyme**
**73-75, rue de l'Epineuil**
**F-16710 Saint-Yrieix sur Charente (FR)**

(72) Inventeur: **Martin, Guy**
**92, Avenue Jean Jaurès**
**Magnac S/ Touvre (FR)**

(74) Mandataire: **Armengaud Ainé, Alain**
**Cabinet ARMENGAUD AINE 3 Avenue Bugeaud**
**F-75116 Paris (FR)**

Courier Press, Leamington Spa, England.

## Description

Dans sa demande de brevet européen EP—A—0 178 204, revendiquant la priorité FR—84 15 043 du 01.10.1984, déposée le 11.09.1985 et publiée le 16.04.1986, la présente titulaire a décrit et revendiqué un procédé de régénération des charbons contenus dans les caissons filtrants des cabines de peinture, caractérisé en ce que, pendant la période d'arrêt de la cabine, le caisson filtrant contenant les charbons actifs ayant retenu les solvants durant la phase de travail de la cabine est traversé par une quantité d'air neuf égale à cinq fois la quantité d'air traitée par ce caisson pendant la phase de travail de la cabine. Dans ce procédé, on capte les solvants lors de leur émission, et on les stocke dans les charbons actifs des caissons filtrants, puis, pendant la phase de régénération des filtres, on dilue suffisamment et d'une manière homogène les solvants stockés avec de l'air frais, avant d'effectuer leur rejet dans l'atmosphère, en restant en-dessous des normes actuelles en matière de seuils olfactifs.

Il découle de la mise en oeuvre d'un tel procédé que:

a) l'on peut en principe stocker les solvants en grande partie dans les caissons à charbons actifs, au moment d'une forte émission, et éviter un rejet atmosphérique, donc une pollution;

b) on rend homogène la désorption (qui serait hétérogène si elle était effectuée lors de l'émission), grâce au système de régénération.

Par conséquent, ce système antérieur permet d'éliminer les nuisances dues aux odeurs, mais, en ce qui concerne les rejets atmosphériques (quantifiés dans l'année), on n'obtient pas d'amélioration, étant donné que, pendant la période de régénération, on dilue les solvants en-dessous de leur seuil olfactif avant d'effectuer leur rejet dans l'atmosphère. Si l'on veut supprimer toute pollution, il est nécessaire de récupérer les solvants après leur captage dans les caissons filtrants.

On connaît déjà (DE—B—27 07 226) un dispositif de destruction des solvants contenus dans l'atmosphère extraite de cabines de peinture comportant un caisson adsorbant à charbons actifs, un brûleur à source de chaleur indépendante pour détruire les solvants pendant la régénération et pour chauffer un gaz inerte de régénération dans un échangeur, un ventilateur pour faire circuler le mélange gaz de régénération-solvant entre le caisson filtrant et le brûleur.

Ce dispositif connu doit comporter l'utilisation d'un gaz inerte de régénération qui circule dans une boucle fermée, et il nécessite un comburant extérieur pour produire la chaleur nécessaire à la régénération.

La présente invention se distingue de cet état antérieur de la technique en ce que l'on utilise comme gaz de régénération de l'air aspiré par un ventilateur à travers une prise d'air extérieure et en ce que l'air utilisé pour la régénération des charbons actifs, et chargé de solvants, est envoyé totalement dans le brûleur, pour être utilisé comme comburant, et ensuite décharge à l'atmosphère par une cheminée.

Un tel dispositif présente l'avantage qu'il contient moins de composants, ce qui le rend constructivement beaucoup plus simple.

Le dispositif objet de l'invention vient compléter l'installation de captage des odeurs (piège à odeurs) décrite dans le brevet antérieur pour effectuer une destruction des solvants captés, cette possibilité étant due au fait que, pendant la période de dessolvation des charbons actifs des caissons filtrants, on peut effectuer un rejet homogène et concentré des solvants.

En conséquence, cette invention consiste essentiellement à prévoir, à la sortie de l'installation de captage des odeurs décrite dans le brevet antérieur, un dispositif assurant la destruction des solvants stockés dans les charbons actifs.

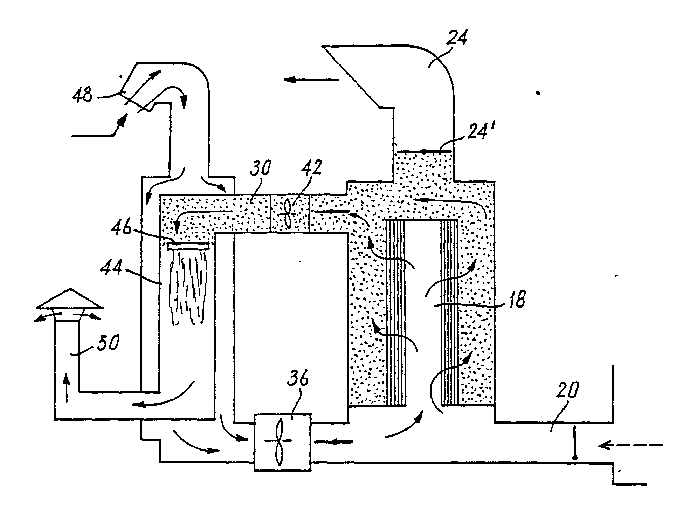

D'autres caractéristiques et avantages de cette invention ressortiront de la description faite ci-après en référence au dessin annexé, qui en illustre un mode de réalisation.

La figure unique est une vue schématique représentant, en coupe longitudinale, le dispositif conforme à l'invention.

Sur le dessin, la référence 18 désigne le caisson à charbons actifs, comme dans le brevet susmentionné, l'air chargé en solvants en provenance de la cabine de peinture (non représenté) arrivant par la conduite 20, munie d'un registre, le rejet dans l'atmosphère, pendant la phase de captation des solvants par le caisson filtrant 18, s'effectuant au travers de la conduite 24, pourvue d'un registre 24'.

La réalisation illustrée par la figure unique comporte un circuit de ventilation en boucle ouverte, et un système combiné de récupération d'énergie par croisement. L'air chargé en solvants en provenance du caisson filtrant 18 est forcé dans la conduite 30 par un ventilateur 42, et il est délivré dans un échangeur 44 chauffé par un brûleur 46 à source de chaleur indépendante, le mélange air+solvants servant de comburant. L'installation comporte en outre un ventilateur de circulation 36, une prise d'air extérieur 48 pour la dessolvation, et une cheminée 50 pour le rejet extérieur des gaz de combustion sortant de l'échangeur 44. Les solvants sont détruits par le brûler 46 dans l'échangeur 44, et l'air nécessaire à la dessolvation réalisée dans le caisson 18 est réchauffé par passage dans l'échangeur, après prélèvement en 48.

De la description qui précède, on comprend que le dispositif selon l'invention, associé au dispositif décrit dans le brevet antérieur fonctionne selon les phases suivantes:

1—phase d'utilisation de l'installation productrice de solvants (notamment cabine de peinture), avec un volume important d'air et un rejet hétérogène, la captation des solvants sur les charbons actifs des caissons adsorbants 18 étant effectuée pendant cette phase;

2—l'exploitation étant terminée (notamment, arrêt de la carbine de peinture), on réalise soit la régénération des charbons actifs des caissons 18, par dessolvation des solvants de la manière décrite dans le brevet antérieur, soit la destruction des solvants, conformément à la présente invention.

**Revendication**

Dispositif de destruction des solvants dans l'air extrait de cabines de peinture comportant un caisson adsorbant (18) à charbons actifs, un brûleur (46) à source de chaleur indépendante, pour détruire les solvants pendant la régénération et pour chauffer un gaz de régénération dans un échangeur (44), un ventilateur (42) pour faire circuler le mélange gaz de régénération-solvant entre le caisson adsorbant (18) et le brûleur (46), caractérisé en ce que l'on utilise comme gaz de régénération de l'air aspiré par un ventilateur (36) à travers une prise d'air extérieure (48) et en ce que l'air utilisé pour la régénération des charbons actifs, et chargé de solvants, est envoyé totalement dans le brûleur (46), pour être utilisé comme comburant, et ensuite décharge à l'atmosphère par une cheminée (50).

**Patentanspruch**

Vorrichtung zur Zersetzung von in der Abluft von Farbkabinen enthaltenen Lösungsmitteln, die einen Adsorberkasten (18) mit Aktivkohle, einen Brenner (46) mit einer unabhängigen Wärmequelle zur Zersetzung der Lösungsmittel während der Regenerierung und zum Erhitzen eines Regenerationsgases in einem Wärmetauscher (44), sowie einen Ventilator (42) für die Zirkulation des Gemisches aus Regenerationsgas und Lösungsmittel zwischen dem Adsorberkasten (18) und dem Brenner (46) umfaßt, dadurch gekennzeichnet, daß als Regenerationsgas Luft verwendet wird, die von einem Ventilator (36) durch eine Frischluftöffnung (48) angesaugt wird, und daß die für die Regenerierung der Aktivkohle verwendete und mit Lösungsmitteln belastete Luft zur Gänze in den Brenner (46) geleitet wird, um als Brennstoff genutzt zu werden, und anschließend durch einen Kamin (50) in die Atmosphäre abgeleitet wird.

**Claim**

Device for the destruction of solvents in the air extracted from paintcabins comprising an activated charcoal adsorbant container (18), a burner (46) with independant heat source, for destroying the solvents during regeneration and for heating a regeneration gas in an exchanger (44), a fan (42) for circulating the regeneration gas-solvent mixture between the adsorbant container (18) and the burner (46), characterised in that the regeneration gas used is air sucked in by a fan (36) through an external air intake (48) and in that the air used for regenerating the activated charcoal, and charged with solvents, is totally conveyed to the burner (46) to be used as oxygen carrier, and is then discharged to the atmosphere through a chimney (50).